# EUROPEAN PATENT APPLICATION

(11) **EP 2 695 529 A2**
(43) Date of publication of application: **12.02.2014**
(21) Application number: 13179315.0
(22) Date of filing: 05.08.2013
(51) Int. Cl.: A23L 1/31, A23L 3/3409, A23L 3/3418

(54) **Method and equipment for ageing a food product**

(30) Priority: 09.08.2012 IT VR20120166
(71) Applicant: Grandi Salulimifici Italiani S.p.A., 41100 Modena MO (IT)
(72) Inventor: MITTICH, Stefan, 39023 Dobbiaco, Bolzano (IT)
(74) Representative: Marchi, Paolo

(57) **Abstract**

The present disclosure refers to an ageing method for a food product (9), in particular speck or another cured meat that, during the ageing period, is dehydrated at least partially, with a lowering of the water content in the product. The method includes the steps of positioning the food product to be aged (9) into an inner chamber (20) of an ageing store (2), inside which a modified atmosphere is produced; the modified atmosphere comprising nitrogen and is poor in oxygen in comparison to a normal air. After an ageing period, the aged product (90) is removed from the inner chamber (20). The method is useful for preventing the growth of mould from ageing on the surface (91) of the aged food product (90). The present disclosure refers also to an ageing equipment (1) for a food product (9).

## Description

The present disclosure generally refers to the food sector. In particular, the present disclosure refers to a method and an equipment for the ageing of a food product, which, to be more specific, is speck.

In order to improve the preservation of food products and in particular of cured meat, it is usual to resort to an ageing phase, during which the food product dries out (i.e., it is dehydrated at least partially) and loses weight.

First of all, it is necessary to clarify that this ageing phase is very different from a curing phase that, for example, is described in the international patent application n. WO 92/18011 or in U.S. patent n. US 6,099,881.

In fact, the ageing phase is after any curing phase.

In the curing phase, the product is treated for example with brine or other substances (such as nitrogen dioxide, in US 6,099,881) and/or flavourings to stabilize and/or flavour the product. The curing phase has a duration of a few hours or a few days, during which the product does not have enough time to dry out and lose weight.

In the ageing phase, on the contrary, the product is left exposed to the air inside an ageing store for a much longer period, of the order of weeks or months. During this period, the product dries out and loses weight, moreover it undergoes possible chemical and physical processes that occur in the long term and under specific conditions of temperature and humidity of the ageing store.

For example, in the case of speck, the production starts from a pork leg, from which a ham is cut. A curing preparation, namely a mixture of salt and spices, is added to the ham. This is followed by two or three weeks of salting phase, during which the ham is stored at temperatures ranging between 2 and 8 degrees: salt, spices and other additives penetrate into the core of the ham so as to make it stable. After the salting phase, the ham is hung or placed on frames to be dried out on its surface and smoked. The smoking phase is carried out at temperatures ranging between 18 and 20 degrees inside specific stores, by applying a combined program of drying and smoking. The smoke for the smoking phase is produced by burning beech wood chips. After the smoking phase, the ham is dry on the surface and moreover the bactericidal substances from the smoke have a preservative effect.

Then the ageing phase follows, which has a duration ranging between 10 and 27 weeks, depending on the type of product. The ageing phase takes place in large stores that contain 8.000 - 20.000 hams. The ageing phase basically consists in leaving the ham exposed to the air for a long time. The ageing air has a temperature of 12 - 14 degrees and a relative humidity of 65 - 75%.

During the ageing phase, the ham dries out (so being dehydrated at least partially) and loses weight: the overall weight loss is in the order of 30 - 40%, depending on the type of product. In addition a proteolysis, that contributes to the formation of the typical flavour of the product, occurs during the ageing phase.

The above-indicated conditions (i.e., temperature ranging between 12 and 14 degrees, relative humidity ranging between 65% and 75%, moderate ventilation) favour the growth of mould on the surface of the ham.

At the end of the ageing, the ham is washed to remove mould and then its outer surface is dried.

In some cases, for example when the ham is a semi-finished product to be subjected to a cleaning / trimming and to be sliced before sale, the ham, after washing and drying of the outer surface, undergoes a softening phase to soften the surface of the product, so as to obtain a crust that is softer and can be better processed during the cleaning / trimming phase.

During the softening phase, the ham is kept inside a store having a high level of relative humidity (about 80 - 85%). Due to the high humidity level, there is the risk of a re-growth of mould: therefore, the product is packaged under vacuum or under a protective atmosphere, in packages that may contain one or more pieces of speck. The packages under vacuum or under a protective atmosphere are opened prior to the final processing of the product, for example before the cutting and cleaning / trimming of the ham.

Usually, the softening phase is not carried out for the hams that are sold as a whole piece or cut in half.

The inventor of the subject of the present disclosure has understood that the mould, which grows on the surface of the food product during the ageing phase, entails sanitary and economic problems that have been underestimated so far. Actually, mould is usually regarded as a nearly traditional phenomenon for long-time-aged cured meat, even contributing, in some way, to the typical peculiarities of the products.

The inventor, however, has considered that the potential development of mycotoxins is a non-negligible risk that is related to the presence of mould. The greater part of mould on the speck is not to be regarded as a toxin-generator; however, strains with a toxin-generating capability are often isolated as well. This does not necessarily mean that toxins on the speck product are actually produced in any case, but this points out that, even if colonization of speck by mould usually takes place by species that are well known and typical for each factory (the so-called "native *flora*"), changes in the *flora* may also occur and then the colonization of the speck surface by native mould is to be regarded as a process that is not perfectly guided and then it may imply a risk of sanitary problems.

Moreover, mould grows not only on the surface of the product, from which it can be at least partially removed by washing, but it enters also into the cracks of the product (in particular into the cracks between the muscles), so creating infiltrations of mould that cannot be removed by washing.

In order to ensure that mould infiltrations are not present in the product to be consumed, the product has to be trimmed off by hand before slicing: this trimming operation entails a waste in the order of 6% by weight and a considerable labour. This operation should be carried out by the buyer / consumer for the products that are sold as a whole piece.

The removal of infiltrations by trimming-off entails, in addition to a large amount of waste, even the removal of adjacent surface areas and then a partial loss of the typical peculiarities of the product. In this respect, it should be considered that speck is made different from raw ham just by the speck surface, due to its spices and flavouring substances from smoking. Therefore, the trimming-off removes a part of the speck surface and also a part of the distinctive peculiarities of speck itself.

In addition to mould, also other aerobic microbes and/or more complex living beings, such as insects, can grow and develop on the speck surface or in the ageing stores in general. Therefore, it is necessary to take steps aimed at opposing these potential problems.

Lastly, another problem related to a long-time exposure of the product to the air is the oxidation of fat, mainly at the lateral edges of the hams of speck: the longer the ageing, the larger the increase in phenomena of fat oxidation, with bad effects on the features of the product, which may have a rancid and yellowish fat and a bitter taste.

Thus, the present disclosure moves from the above-described sanitary and economic problems, which have been identified by the inventor; considering such problems, the inventor has identified the technical problem of providing an ageing method for a food product (in particular, speck) that allows to overcome the drawbacks mentioned above with reference to the known art and / or to achieve further advantages.

This is achieved by providing an ageing method according to independent claim 1. The technical problem is also solved by an ageing equipment according to claim 14. Specific embodiments of the subject of the present disclosure are defined in the corresponding dependent claims.

The present disclosure moves also from the observation (made by inventor) that the drawbacks of the known art are related to the fact that, in the ageing store, there is a favourable environment for the growth and life of mould and microbes.

One aspect at the basis of the solution proposed by the present disclosure is to carry out the ageing of the food product in an environment that is poor in oxygen or even free of oxygen (in the present disclosure, "poor in oxygen" includes also "free of oxygen"). Consequently , the growth of mould, aerobic bacteria and / or insects is inhibited. In practice, the ageing phase is carried out in an environment that is substantially inert and unsuited to life.

This is useful for obtaining an aged food product whose surface keeps a substantially perfect sanitary condition. Therefore, the aged product leaving the ageing store has no microbiological faults and any trimming-off for removing the mould infiltrations is not required. In fact, the ageing in an oxygen-poor environment prevents the formation of areas infected or affected by mould infiltrations.

Thus, the aged product does not give rise to waste from trimming-off; this implies the advantage that the whole product can be used as food and the required labour is reduced.

Moreover, the final washing, which is carried out in the known art, is not required as well; this implies the advantage of avoiding the risk of further mould growth due to the washing water that remains on the surface and in the cracks of the product.

In addition, the phenomena of fat oxidation and fat going rancid cannot occur without oxygen, then also these problems are substantially eliminated.

Even the optional phase of softening, to be carried out at a higher relative humidity and then having a potentially increased risk of mould growth, can be carried out in an oxygen-poor environment, or even oxygen-free, in which the mould cannot grow. According to an aspect of the present disclosure, the modified atmosphere is composed almost exclusively of nitrogen, except for a small residual concentration of oxygen (for example, less than 0.3%) and the water vapour that is produced during the ageing. The use of nitrogen is useful for producing an inert atmosphere in a simple way and at a very low cost.

According to another aspect of the present disclosure, the ageing equipment comprises a nitrogen generator, which is capable of treating air to remove oxygen and to obtain an oxygen-poor gas (practically, almost pure nitrogen). This is useful for having an ageing equipment that is capable of producing the modified atmosphere on demand and in a completely autonomous way, without the need of relying on external suppliers of nitrogen.

Further advantages, characteristic features and the mode of use of the subject of the present disclosure will be made evident in the following detailed description of an embodiment thereof, given by way of example and not for limitative purposes. However, it is evident that each embodiment of the subject of the present disclosure may have one or more of the advantages listed above; in any case, it is not required for each embodiment to concomitantly have all the listed advantages.

Reference will be made to the figures of the annexed drawings, wherein:
- Figure 1 shows a schematic front view of an equipment for ageing a food product, according to the present disclosure;
- Figure 2 shows a scheme of an ageing equipment according to the present disclosure, where an ageing store is shown in a partially-sectional view;

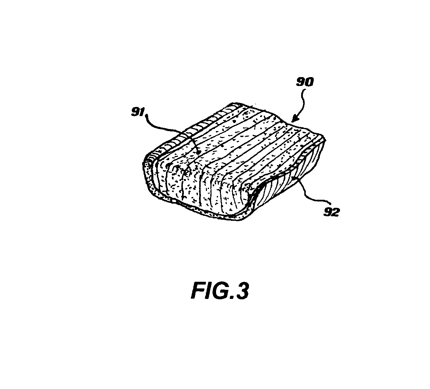

- Figure 3 shows a ham of speck that was aged according to the ageing method of the present disclosure.

The following detailed description is carried out with specific reference to speck. However, it should be understood that the here-described ageing method and ageing equipment can be applied in a similar way also to other food products and in particular to other cured meats that are usually aged for a long time, such as raw ham, salami, cured neck of pork. The ageing method and the ageing equipment can be analogously applied to cheese, in particular to rounds of cheese to be aged. Some of these products may show drawbacks during the ageing phase that are different from the drawbacks pointed out for speck (for example, salami would not show the problem of mould infiltrations); however, the use of the here-described ageing method leads to a sanitary advantage for all products, due to non-growth of mould on the surface and to fat prevented from going rancid.

In the context of this disclosure, "ageing" means a processing procedure of a food product, during which the food product is stored for a period of time in an environment with appropriate conditions of temperature and humidity, such as to lead to an at least partial dehydration of the food product. This dehydration involves not only the surface of the product, but also his core, i.e. its internal mass.

The water content of the aged product (i.e., the moisture of the product) at the end of the ageing period is less than the water content of the product before the ageing: the weight loss of the product during the ageing can be in the order of 30 - 40%.

In the context of this disclosure, a "long" time of ageing can be regarded as a period of two months or more. In fact, it was noticed that, in the known art, the growth of mould is significant and potentially problematic especially when the ageing has a duration of two months or more.

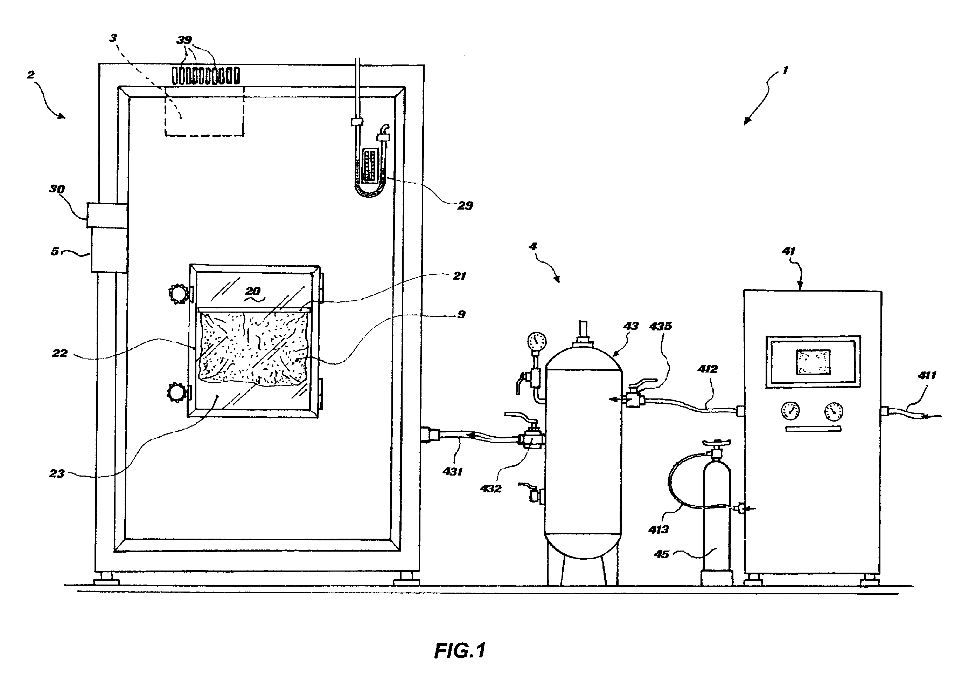

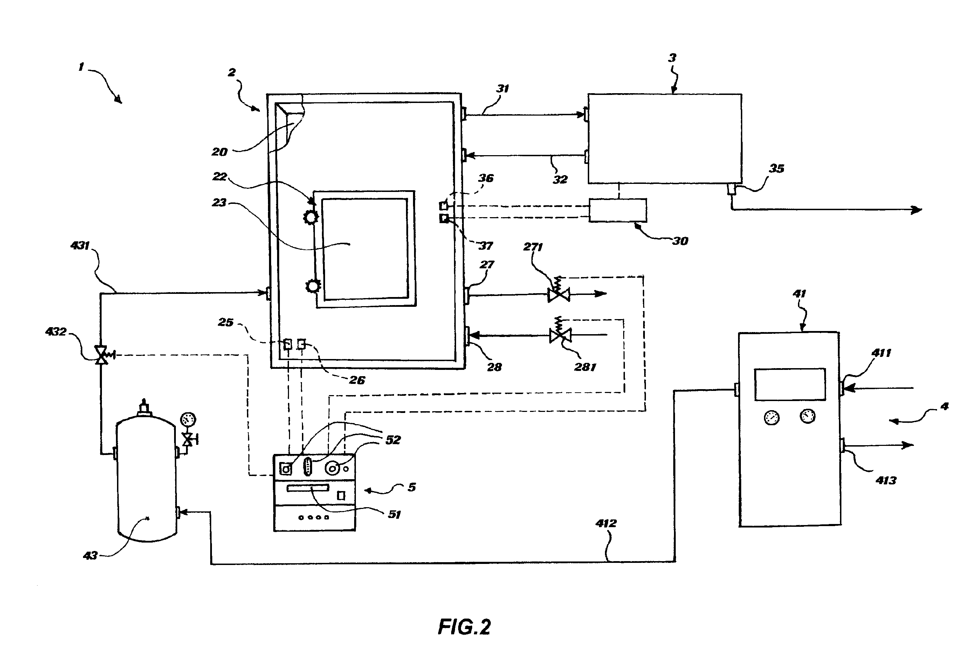

An ageing equipment according to the present disclosure is shown in Figures 1 and 2, which respectively show a view of the equipment and an operational scheme. The ageing equipment is generally indicated by reference number 1.

The ageing equipment 1 comprises an ageing store 2 that has an ageing chamber 20 inside, which is adapted to contain the products to be aged 9. Basically, the ageing store 2 is an apparatus or a machine that delimits and encloses an inner volume or inner chamber 20 for ageing; food products 9 to be aged are stored in the inner volume or chamber 20.

The ageing store 2 may be substantially cabinet-shaped, with a door 22 for accessing the ageing inner chamber 20. The door 22 can be hermetically closed and, for example, it is provided with a transparent window 23 (for example, a glass window) to observe the ageing chamber 20 and visually inspect the food products 9 contained inside.

The cabinet-shaped ageing store 2 can be installed in any premises.

As an alternative, the ageing store can be a room or another environment that can be hermetically closed.

The ageing store 2 is made so as to ensure the air tightness, i.e. the inner chamber 20 is airtight and hermetically separated from the external environment. The door 22, the connecting tubes to the outside and, in general, the joints are provided with gaskets or other members that prevent unwanted infiltrations of air into the inner chamber 20.

The ageing equipment 1 further comprises an air-conditioning system 3 for the inner chamber 20, a treatment system 4 for producing a modified atmosphere in the inner chamber 20, a control unit 5 for the modified atmosphere (i.e., for controlling the oxygen concentration and optionally the internal pressure), and a control unit 30 for the air-conditioning system 3.

The control units 5, 30, via respective microprocessors, manage the operation of the ageing equipment 1 on the basis of the set operating conditions and on the basis of the measures that they receive from sensors or meters to which the control units 5, 30 are operatively connected.

For example, the control unit 5 for the modified atmosphere is also provided with a display 51 and control buttons 52, to display information on the operation of the ageing equipment 1 and to allow an operator to set and change the operating conditions of the equipment 1.

The control unit 30 for the air-conditioning can be similarly provided with a display and control buttons as well.

In one embodiment, the control unit 5 for the modified atmosphere and the control unit 30 for the air-conditioning can be replaced by a single control unit that controls both the modified atmosphere and the air-conditioning.

The air-conditioning system 3 has the task of treating the atmosphere in the inner chamber 20 to maintain desired values of temperature (e.g., 12 - 14 °C) and relative humidity (e.g., between 65% and 75%) during the ageing.

The air-conditioning system 3 is connected to the inner chamber 20 by pipes of delivery 31 and return 32. Moreover, the air-conditioning system 3 is operatively connected to the respective control unit 30, which controls and manages the operation thereof on the basis of the set operating conditions.

Suitable meters of temperature 36 and relative humidity 37, which measure the conditions inside the inner chamber 20, are provided. The air-conditioning system 3 also keeps a certain ventilation level in the inner chamber 20, such a ventilation level being sufficient to ensure homogeneous conditions of the atmosphere throughout the chamber 20.

The air-conditioning system 3 is provided with a condensate separator and a condensate drain 35, which allow to discharge the moisture removed from the atmosphere of the inner chamber 20 to the outside of the ageing store 2.

For example, the air-conditioning system 3 is installed in the ageing store 2 or even inside the chamber 20, so that also the air-conditioning system 3 is airtight from the external environment. In other words, the air-conditioning system 3, the pipes 31, 32, and the condensate drain 35 are inside the ageing chamber 20, so that there are neither losses of modified atmosphere nor infiltrations of air with oxygen from the external environment.

In Figure 2, the air-conditioning system 3 and the pipes 31, 32, 35 are shown outside the chamber 20 merely for sake of clarity of the figure and for better illustrating the operational scheme of the ageing equipment 1.

The ageing store 2 may have ventilation openings 39, not communicating with the inner chamber 20, for allowing a cooling of the air-conditioning system 3 (for example, for cooling the condenser of the air-conditioning system 3).

The treatment system 4 has the task of producing a modified atmosphere inside the ageing inner chamber 20; such a modified atmosphere comprises nitrogen and is poor in oxygen in comparison to a normal air. In fact, the modified atmosphere produced inside the ageing inner chamber 20 has a molar concentration of oxygen that is less than 1%, in particular less than 0.3%, whereas normal air has a molar concentration of nitrogen of about 78% and a molar concentration of oxygen of about 21%. The remaining part of the modified atmosphere consists substantially of nitrogen and water vapour. As a borderline case, "oxygen-poor atmosphere" refers also to an atmosphere that is completely free of oxygen.

In other words, a substantially-inert modified atmosphere is produced inside the ageing inner chamber 20.

For example, the treatment system 4 comprises a nitrogen generator 41 and a storage tank 43. The nitrogen generator 41 is an air-filtering apparatus that, by molecular-sieve filters, is capable of removing oxygen from air. Compressed air (for example, at 7-10 bar) from the external environment is fed into the nitrogen generator 41 via a respective inlet conduit 411. The compressed air is dried and passed through the molecular-sieve filters, which adsorb oxygen. Thus, a gas poor in oxygen, containing nitrogen with a molar concentration greater than 99% (in particular, a concentration of 99.9%) and oxygen with a molar concentration lower than 0.1%, is obtained. As a borderline case, "oxygen-poor gas" refers also to a gas that is completely free of oxygen.

This oxygen-poor gas, which basically is an inert gas, is stored into the tank or cylinder 43, to which the nitrogen generator 41 is connected via a conduit 412 (possibly provided with a shut-off valve 435). For example, the oxygen-poor gas is nearly pure nitrogen and is stored into the tank 43 at a pressure of 8 bar.

The molecular-sieve filters are periodically regenerated by a flowing (e.g., via a purge gas), so obtaining an oxygen-rich gas that is discharged from the nitrogen generator 41 via a respective outlet conduit 413. The so-obtained oxygen-rich gas is discharged into the external environment or, in case, is temporarily stored into a respective discharge tank 45.

Similarly, other types of nitrogen generator 41 that operate according to a principle different from the molecular-sieve filters, such as a generator with a selective-permeation membrane, can be used.

The storage tank 43 is connected to the ageing store 2 via a respective supply conduit 431, provided with a supply valve 432 that has a function of shut-off and adjustment. The valve 432 is controlled by the control unit 5 for the modified atmosphere.

The ageing store 2 is further provided with a discharge conduit 27 for the atmosphere of the inner chamber 20 and an inlet conduit 28 for outside air. Both conduits 27, 28 are provided with respective shut-off valves 271, 281, which are controlled by the control unit 5.

The oxygen concentration and the pressure of the atmosphere in the inner chamber 20 are measured by an oxygen concentration meter 25 and a pressure meter 26, respectively. Both meters 25, 26 are connected to the control unit 5.

Optionally, the pressure meter 26 may not be present; in this case, the control unit 5 would control the oxygen concentration only. The pressure in the inner chamber 20 may be maintained rather stable by calculating in advance the amount of oxygen-poor gas to be supplied into the inner chamber 20 in order to obtain the required oxygen concentration; estimated values of the losses of modified atmosphere and of the air infiltrations from outside are to be considered in the calculation.

In order to minimize or eliminate the air infiltrations into the inner chamber 20 if the latter is not perfectly airtight (considering that a perfect air-tightness is extremely difficult to achieve), the chamber 20 is maintained at a slight overpressure (for example, 1 - 2 mmHg, or a few millibars) relative to the external environment. The ageing store 2 is provided with a differential pressure gauge 29 to check even visually, in an easy manner, whether the overpressure in the inner chamber 20 is at a desired value.

The control units 5, 30 are materially mounted outside the ageing chamber 20.

The operation of the ageing equipment 1 and the ageing method are described below.

Taking speck as an example of application, the early phases of the production process (i.e., curing, salting, surface drying and smoking) can be performed as in the known art. The ageing phase is instead implemented by an ageing equipment 1 according to the present disclosure.

Speck hams 9 to be aged are positioned into the ageing inner chamber 20, which a worker can enter through the door 22 that can be opened. For example, the hams 9 are hung by nets to support bars 21 mounted in the inner chamber 20.

The door 22 is hermetically closed, so as to obtain a hermetic and airtight chamber 20.

The desired conditions of temperature, humidity, overpressure, and oxygen concentration inside the ageing chamber 20 are set on the control unit 5.

The treatment system 4 is operated and an oxygen-poor gas (i.e., basically containing nitrogen with any residual traces of oxygen) is stored into the storage tank 43. In other words, an amount of air drawn from outside is treated by the treatment system 4 to remove oxygen, thereby obtaining an oxygen-poor gas or even a completely oxygen-free gas.

The oxygen-poor gas is fed from the tank 43 into the inner chamber 20 via the conduit 431, after the control unit 5 has opened the supply valve 432. The control unit 5 opens also the valve 271 on the discharge conduit 27 to discharge air already inside the inner chamber 20.

The oxygen concentration in the inner chamber 20 is continuously monitored by the oxygen meter 25. When the oxygen molar concentration decreases to the value of 0.1%, the supply valve 432 and the discharge valve 271 are closed by the control unit 5.

Thus, a modified atmosphere comprising nitrogen and being poor in oxygen is produced inside the ageing inner chamber 20 through the feeding of oxygen-poor gas from the tank 43 into the inner chamber 20. In particular, the modified atmosphere is composed almost entirely of nitrogen, in addition to a little amount of remaining oxygen and to water vapour that is released from the hams 9 during the ageing. Therefore, it is an inert atmosphere.

The hams 9 are kept in the hermetically-closed inner chamber 20 for an established ageing period (for example, ranging between 10 and 27 weeks), during which the hams 9 are within the inert modified atmosphere.

During the ageing period, the oxygen concentration in the inner chamber 20 is continuously measured. When the oxygen molar concentration exceeds the value of 0.3% (for example, due to infiltrations of air from outside), the supply valve 432 is opened by the control unit 5, thus feeding further nitrogen from the tank 43 until the oxygen molar concentration decreases to the value of 0.1%. Upon reaching this value, the supply valve 432 is closed and the nitrogen feeding is halted.

In other words, the control unit 5 acts so that the oxygen molar concentration in the ageing chamber 20 is maintained between 0.1% and 0.3%, thus corresponding to an average value of 0.2% that is the target value for this ageing process. Basically, the control unit 5 maintains the oxygen molar concentration in the inner chamber 20 below a threshold value, in particular 0.3%.

Also the pressure in the inner chamber 20 is checked to ensure that a slight overpressure in the chamber 20 is maintained. If necessary, the supply valve 432 and the discharge valve 271 can be operated now and then by the control unit 5 to adjust the pressure in the chamber 20. As previously mentioned, a pressure meter may not be provided in the inner chamber 20; in such a case, the desired conditions may be obtained by loading a greater amount of oxygen-poor gas into the inner chamber 20, this amount being calculated in such a way that the inner pressure remains still above the desired value despite the losses and infiltrations (that can be estimated in advance) during the ageing period.

The air-conditioning system 3 treats the atmosphere in the ageing inner chamber 20 to maintain the values of temperature (e.g., 12 - 14 °C) and relative humidity (e.g., between 65% and 75%) that are suitable for the ageing process.

The drying or dehydration of the hams 9 during the ageing process should not be too intense and excessive, hence the humidity and ventilation in the inner chamber 20 are adequate to prevent an excessive dehydration of the surface layer of the hams 9. In fact, the formation of a dried-up surface crust could constitute a barrier and inhibit the escape of moisture from the centre of the ham 9, thus leading to a product that is moist at the centre and too dry at the surface.

During the ageing process, the hams 9 lose weight and proteolysis occurs, which contributes to the formation of the typical flavour of speck.

The weight loss is mainly due to evaporation of water (i.e., internal moisture) from the ham 9; the evaporated water goes into the modified atmosphere in the inner chamber 20 and is removed by the air-conditioning system 3, which is set to maintain the relative humidity below a certain threshold value (e.g., 75%). The removed water is discharged outside through the drain 35.

In other words, while the hams 9 are kept in the ageing chamber 20, the modified atmosphere is controlled and treated to maintain preset conditions of temperature, relative humidity and oxygen concentration.

The transparent window 23 allows to observe the hams 9 during the ageing without opening the door 22.

The low concentration of oxygen in the modified atmosphere inside the ageing chamber 20 prevents the development and growth of mould, aerobic microbes, insects, other aerobic pathogens; at the same time, the phenomena of fat oxidation of the hams 9 cannot take place due to the lack of oxygen.

In other words, an environment unsuitable to proliferation of organisms and unwanted phenomena is created in the ageing chamber 20. Thus, the hams 9 maintain a perfect sanitary condition, being without mould on the surface and without mould infiltrations in the body of the ham.

A phase of softening the hams 9 before removing the latter from the ageing store 2 may be useful for products that are aged for long times (e.g., for more than two months) and that, therefore, may have a surface rather hard and difficult to cut.

If a softening phase is required (for example, because the aged product should be sliced before marketing), this softening phase is carried out for example during the last weeks after the real ageing process, by keeping the hams 9 in the inner chamber 20 still in the inert and oxygen-poor modified atmosphere (substantially with the same oxygen concentration as in the ageing), but with a relative humidity that is higher than the relative humidity during the ageing. For example, the relative humidity in the softening phase ranges between 80% and 90%.

Thanks to the hams being exposed to a more humid environment, the surface of the hams 9 gets softer and the subsequent operations of cutting and slicing are made simpler.

Even the softening phase is controlled and managed by the control units 5, 30.

At the end of the process, the aged hams 9 are removed from the inner chamber 20 and from the ageing store 2.

Since the lack of oxygen is dangerous and even lethal for the workers, the latter are not allowed to access the inner chamber 20 without any control. Access to the inner chamber 20 is allowed only after the inner chamber 20 has been "washed" by introducing outside air and restoring a normal concentration of oxygen. Basically, a replacement of the atmosphere in the inner chamber 20 is carried out.

This can be achieved by opening the door 22 and leaving it open for a certain period of time.

As an alternative, the replacement of the atmosphere can be made in a controlled manner by the control unit 5: the discharge valve 271 and the air inlet valve 281 are opened, so letting the modified atmosphere going out through the discharge conduit 27 and letting outside air going in through the inlet conduit 28. In order to speed up the replacement, at least one of the two conduits 27, 28 can be provided with an extraction fan or a blower (not shown).

When the oxygen concentration detected by the meter 25 in the inner chamber 20 is again near the value of 21% of normal air, the control unit 5 authorizes the opening of the door 22.

It is evident that the replacement of the atmosphere of the inner chamber 20 with air and the opening of the door 22 should be avoided as much as possible during the ageing process, because the entry of oxygen may jeopardise the sanitary condition of the hams 9 by allowing a development of mould. In the course of ageing, therefore, the workers should access the inner chamber 20 only in exceptional circumstances that require a non-deferrable intervention; the progress of the ageing can be supervised through the window 23 without any need of opening the door 22. The product leaving the store 2 at the end of ageing does not have any microbiological or chemical faults and the product is not required to be cleaned and trimmed off to remove mould and rancid fat. Thus, even the final washings, which could give rise to the development of mould as well, are avoided.

An aged food product 90 is thus obtained; the aged food product 90 has its own outer surface 91 composed of a skin or rind 92 that is continuous and not trimmed off, wherein the rind 92 and in particular the outer surface 91 are without mould from the ageing.

For example, the continuous rind 92 (or continuous envelope) can be the natural skin of the original leg (as in the case of raw ham), a smoked crust (as in the case of speck), a piece of gut (as in the case of salami) or a crust in general. Since no trimming-off is required for removing mould and rancid fat (faults that are not present at all in the aged product 90), the rind 92 is continuous, i.e. it has no interruptions caused by cuts for removal of parts of the product surface.

According to a variant embodiment, the operations of opening and closing the valves are manually carried out by a worker instead of being automatically carried out by the control unit 5.

According to another variant embodiment, the nitrogen generator 41 is not provided and, as a borderline case, the treatment system 4 is composed by a nitrogen tank or cylinder 43 that is supplied already full.

The subject of the present disclosure has been hereto described with reference to embodiments thereof. It is understood that other embodiments might exist, all relating to the same inventive core and falling within the protection scope of the claims hereinafter.

## Claims

1. An ageing method for a food product (9), comprising the steps of:
- providing an ageing store (2) having an inner chamber (20) adapted to contain a food product to be aged (9);
- positioning the food product to be aged (9) into said inner chamber (20);
- producing a modified atmosphere inside said inner chamber (20), the modified atmosphere comprising nitrogen and being poor in oxygen in comparison to a normal air;
- keeping the food product (9) in the inner chamber (20) in said oxygen-poor modified atmosphere for an ageing period, to obtain an aged food product (90);
- removing the aged food product (90) from the inner chamber (20),
wherein the food product (9) during the ageing period is dehydrated at least partially, the water content in the aged product (90) being less than the water content in the product to be aged (9).

2. The ageing method according to claim 1, wherein oxygen in said modified atmosphere has a molar concentration that is less than 1%, in particular oxygen in said modified atmosphere has a molar concentration that is less than 0.3%.

3. The ageing method according to claim 1 or 2, further comprising:
- a step of treating an amount of air to remove oxygen from said amount of air, to obtain an oxygen-poor gas;
- a step of feeding said oxygen-poor gas into the inner chamber (20), to obtain said modified atmosphere.

4. The ageing method according to claim 3, wherein said oxygen-poor gas has a nitrogen molar concentration that is more than 99% and an oxygen molar concentration that is less than 0.1%.

5. The ageing method according to any one of claims 1 to 4, wherein, during the keeping of the food product (9) in the inner chamber (20), the modified atmosphere is controlled and treated in order to maintain preset conditions of temperature, relative humidity and oxygen molar concentration.

6. The ageing method according to any one of claims 1 to 5, wherein said ageing period has a duration of two months or more, in particular said ageing period has a duration ranging between 10 weeks and 27 weeks.

7. The ageing method according to any one of claims 1 to 6, wherein, due to said at least partial dehydration of the food product (9), the aged food product (90) has a weight loss in the order of 30 - 40% in comparison to the food product to be aged (9).

8. The ageing method according to any one of claims 1 to 7, comprising a step of softening the food product (9) before removing the aged food product (90) from the inner chamber (20), in which the food product (9) is kept in an oxygen-poor modified atmosphere for a softening period, the modified atmosphere during the softening period having a relative humidity that is higher than the relative humidity of the modified atmosphere during the ageing period.

9. The ageing method according to any one of claims 1 to 8, wherein said food product (9) is selected among a group comprising: speck, raw ham, salami, cured neck of pork, cured meat to be aged, cheese to be aged.

10. An aged food product (90), obtained by an ageing that is carried out by keeping the food product for an ageing period in an environment with such conditions of temperature and humidity as to cause an at least partial dehydration of the food product (9), wherein the aged food product (90) has its own outer surface (91) that is composed of a rind (92) that is continuous and not trimmed off,
the outer surface (91) and the rind (92) being without any mould from the ageing.

11. The aged food product (90) according to claim 10, said aged food product (90) belonging to a group comprising: speck, raw ham, salami, cured neck of pork, aged cured meat, aged cheese.

12. The aged food product (90) according to claim 10 or 11, the food product having been aged for an ageing period of two months or more, in particular for an ageing period ranging between 10 weeks and 27 weeks.

13. The aged food product (90) according to any one of claims 10 to 12, the aged food product (90) having had a weight loss in the order of 30 - 40% in comparison to the food product to be aged.

14. An ageing equipment (1) for a food product (9), comprising an ageing store (2) having an inner chamber (20) adapted to contain a food product to be aged (9), the ageing equipment (1) further comprising:
- a treatment system (4) adapted to produce a modified atmosphere inside the inner chamber (20), the modified atmosphere comprising nitrogen and being poor in oxygen in comparison to a normal air; and
- a control unit (5) adapted to maintain an oxygen molar concentration inside the inner chamber (20) below a threshold value,
the ageing equipment (1) being configured to maintain said modified atmosphere inside the inner chamber (20) for an ageing period during which the food product (9) is dehydrated at least partially, with a lowering of the water content in the food product (9).

15. The ageing equipment (1) according to claim 14, further comprising an air-conditioning system (3) adapted to remove a water vapour, which is released by the food product (9) during the ageing period, from said modified atmosphere.

16. The ageing equipment (1) according to claim 14 o 15, wherein the treatment system (4) comprises a nitrogen generator (41) adapted to treat an amount of air to remove oxygen from said amount of air, to obtain an oxygen-poor gas to be fed into the inner chamber (20).
